# EUROPÄISCHE PATENTSCHRIFT

(11) **EP 3 623 098 B1**
(45) Veröffentlichungstag und Bekanntmachung des Hinweises auf die Patenterteilung: **02.11.2022**
(21) Anmeldenummer: 18193771.5
(22) Anmeldetag: 11.09.2018
(51) Int. Cl.: B23K 37/04, B23K 20/10, B23K 31/12, B29C 65/82, G01N 3/22, H01R 4/02, H01R 43/02, B23K 101/38

(54) **QUALITÄTSBESTIMMUNG VON SCHWEISSVERBINDUNGEN**
DETERMINING THE QUALITY OF WELD SEAMS
DÉTERMINATION DE LA QUALITÉ DES LIAISONS PAR SOUDAGE

(43) Veröffentlichungstag der Anmeldung: 18.03.2020
(73) Patentinhaber: Aptiv Technologies Limited, St. Michael (BB)
(72) Erfinder: STAAB, Christian, 42897 REMSCHEID (DE); PITSCHER, Norman, 42499 HÜCKESWAGEN (DE)
(74) Vertreter: Manitz Finsterwald Patent- und Rechtsanwaltspartnerschaft mbB

(56) Entgegenhaltungen:
- DE-A1- 19 752 319
- DE-A1-102004 002 180
- DE-B3-102015 100 382
- DE-B3-102016 214 227
- JP-U- S56 130 149
- US-A- 5 587 537

## Beschreibung

Die Erfindung betrifft ein Verfahren zur Qualitätsbestimmung von Schweißverbindungen zwischen einer elektrischen Leitung und einem Kontaktelement (siehe z.B. DE 10 2016 214227 B3).

Bei der Herstellung von elektrischen Kabelsätzen für Fahrzeuge hat sich das Verfahren, elektrischen Leitungen mittels Ultraschallschweißens an den Kontaktelementen zu befestigen, etabliert. Bei elektrischen Leitungen für Hochstromanwendungen, zum Beispiel für den Einsatz in Elektrofahrzeugen, werden große Leiterquerschnitte verwendet. Diese großen Leiterquerschnitte erzeugen, nach dem Ultraschallschweißen großflächige Schweißverbindungen. Beim Ultraschallschweißvorgang werden die einzelnen Litzen der elektrischen Leitung sowohl miteinander als auch an das Kontaktelement geschweißt. Der Bereich des Leitungsendes, in dem die einzelnen Litzen miteinander verschweißt sind, wird in der Fachsprache " Nugget" genannt. Zur Qualitätskontrolle der Schweißverbindung werden stichprobenartig zerstörende Prüfverfahren eingesetzt. Bei diesem Verfahren wird das Kontaktelement fixiert und an der elektrischen Leitung gezogen, bis diese abreißt. Anhand der dabei ermittelten Abzugskräfte kann eine Aussage über die Qualität der Schweißverbindung getroffen werden. Allerdings werden in der Verbindungstechnik für die Kontaktelemente auch Materialstärken eingesetzt bei denen eine zerstörende mechanische Prüfung mit Zug- und Schälverfahren nicht zuverlässig umgesetzt werden kann. Die Kontaktelemente werden deformiert und oder zerreißen noch bevor die Verbindungsstelle versagt. Bei sehr kleinen Querschnitten kann auch die elektrische Leitung reißen bevor die Schweißverbindung nachgibt. Somit werden nicht die zerstörenden Kräfte der Verbindung ermittelt, sondern die Kräfte des Kabelschuhmaterials oder der elektrischen Leitung. Somit ist eine Prüfung der Verbindung nach der Methode von Auszugs- oder Schälkräften nicht möglich. Ein weiterer Nachteil der aus dem Stand der Technik bekannten Abzugsprüftechniken ist es, dass insbesondere bei großen Querschnitten der elektrischen Leitungen, großer mechanischer Aufwand bei den Zugmaschinen betrieben werden muss, um entsprechende Abzugskräfte erzeugen zu können.

Die JP S56 130149 U2 offenbart eine Vorrichtung zur Durchführung der Qualitätsbestimmung von Schweißverbindungen mit zwei relativ zueinander drehbaren Halterungen. Die DE 10 2016 214 227 B3 offenbart ein Verfahren zur Prüfung der Schweißqualität mit Hilfe eines Tests mit Querscherung. Die DE 10 2015 100 382 B3 offenbart das Testen einer Schweißverbindung durch Einbringen von Stößeln in den Schweißbereich. In der US 5 587 537 A und der DE 10 2004 002 180 A1 sind Querzugversuche zum Testen von Schweißverbindungen offenbart. In der DE 197 52 319 A1 ist eine Zugprüfung zum Testen einer Schweißverbindung offenbart.

Die Aufgabe der Erfindung ist es, ein Verfahren zur Qualitätsbestimmung einer Schweißverbindung zwischen einem Kontaktelement und einer elektrischen Leitung bereitzustellen, bei dem das Kontaktelement sowie die elektrische Leitung durch die zerstörende Prüfung wenig belastet werden und die eingebrachte Kraft hauptsächlich auf das zu prüfende Element, die Schweißverbindung, wirkt.

Die Aufgabe wird durch ein Verfahren gemäß Anspruch 1 gelöst. Dieses Verfahren ist unabhängiger von der Materialstärke des Kontaktteils und dem Kabelquerschnitt.

Bei der Untersuchung alternativer Prüftechniken zur Qualitätsbestimmung, hat sich herausgestellt, dass beim Lösen des Schweiß-Nuggets vom Kontaktelement durch Aufbringen einer Torsionskraft auf das Schweiß-Nugget verhältnismäßig geringe Drehmomente aufgewendet werden müssen, um das Schweiß-Nugget von der Schweißfläche des Kontaktelements zu trennen. Dabei wird üblicherweise das Schweiß-Nugget um eine Achse, die senkrecht zur Ebene der Schweißfläche, die auf der Oberfläche des Kontaktelements angeordnet ist, gedreht und dadurch abgeschert. Wahlweise kann auch das Kontaktelement gedreht werden, wenn eine längere elektrische Leitung Probleme beim Handling macht. Zum Drehen des Schweiß-Nuggets ist ein bestimmtes Drehmoment notwendig da das Schweiß-Nugget fest mit dem Kontaktelement verschweißt ist. Bei der Prüfung einer Schweißverbindung wird das Drehmoment stetig erhöht und gleichzeitig für die spätere Auswertung protokolliert. An einem bestimmten Punkt versagt die Schweißverbindung und das Schweiß-Nugget wird von der Kontaktfläche ab geschert. Zu diesem Zeitpunkt fällt auch das benötigte Drehmoment und die Messung ist beendet. Eine weitere Option ist der Einsatz eines Winkelsensors der zusätzlich zum Drehmoment auch den Drehwinkel protokolliert und so zusätzliche Informationen bereitstellt. Dadurch können zusätzliche Messwerte, die in eine erweiterte Berechnung einfließen können, generiert werden. Durch diese zusätzlichen Messwerte können noch bessere Aussagen zur Schweißqualität gemacht werden. Der Einsatz eines Drehwinkelsensors erhöht natürlich die Vorrichtungskosten und es muss abgewogen werden ob die zusätzlichen Informationen den Preis rechtfertigen.

Vorteilhafte Ausbildungen der Erfindung sind den Unteransprüchen, der Beschreibung und der Zeichnung zu entnehmen.

Das Drehmoment-Beaufschlagungsmittel kann das Drehmoment mittels Handkraft erzeugen. Das Drehmoment-Beaufschlagungsmittel kann preiswert in Form eines Drehmomentschlüssels bereitgestellt werden. Es sind allerdings unterschiedlichste Konstruktionen möglich um das Drehmoment von Hand einzubringen. Zangenartige Werkzeuge sind denkbar die über die Hebelarme der Zange und möglicherweise Zahnräder das benötigte Drehmoment erzeugen. Das erlaubt einen mobilen Einsatz auch in Regionen ohne Elektrizität.

Das Drehmoment-Beaufschlagungsmittel kann einen elektrischen Antrieb, der das Drehmoment erzeugt und auf einer Anzeige anzeigt und/oder als elektrisches Signal ausgibt, umfassen. Diese Ausführungsform der Erfindung erlaubt es Messplätze aufzubauen die mit geringem Kraftaufwand auch für große Kabelquerschnitte und massive Kontaktelemente geeignet sind. Es können auch vollautomatische Messplätze realisiert werden, die mit einem Computer oder einer Steuerung verbunden, sowohl Drehmomente erzeugen als auch die Messwerte protokollieren können.

Die zweite Aufnahme kann einen ersten Vorsprung und einen zweiten Vorsprung umfassen, der sich jeweils von der zweiten Halterung in Richtung der ersten Halterung erstreckt Der erste Vorsprung und der zweite Vorsprung sind parallel zueinander und parallel zu der Drehachse angeordnet. Die Drehachse ist dabei zwischen dem ersten Vorsprung und dem zweiten Vorsprung angeordnet. Diese Anordnung lässt sich relativ einfach, ohne großen Konstruktionsaufwand, realisieren. Dabei handelt es sich um eine gabelförmige Struktur, wobei die beiden Gabelforken um die Drehachse, die sich zwischen ihnen befindet, rotieren. Zwischen dem ersten Vorsprung, dem zweiten Vorsprung und einem Teil der zweiten Halterung kann ein Tunnel gebildet sein, der entlang der Längsachse der elektrischen Leitung verläuft und der so dimensioniert ist, dass der Tunnel die nicht mit dem Kontaktelement verschweißte Oberfläche des Schweiß-Nuggets, zumindest entlang eines Teils der Länge des Nuggets entlang der Längsachse umgeben kann. Der Tunnel bietet um das Schweiß-Nugget angeordnet die Möglichkeit, große Drehmomente auf das Schweiß-Nugget zu übertragen.

Der erste Vorsprung kann eine erste Innenfläche aufweisen und der zweite Vorsprung kann eine zweite Innenfläche aufweisen. Die erste Innenfläche und die zweite Innenfläche sind einander gegenüber in einem ersten Abstand angeordnet. Der Abstand ist so bemessen, dass die nicht mit dem Kontaktelement verschweißte Oberfläche des Schweiß-Nuggets an die erste Innenfläche und an die zweite Innenfläche angrenzt. Dieser Aufbau erlaubt es den ersten Vorsprung und den zweiten Vorsprung spielfrei an dem Schweiß-Nugget zu positionieren. Sobald das Drehmoment erzeugt wird, wird es augenblicklich an das Schweiß-Nugget übertragen. So werden Schläge gegen das Schweiß-Nugget vermieden, die auftreten würden, wenn das Drehmoment-Beaufschlagungsmittel aktiviert würde und die Vorsprünge mit Schwung gegen das Schweiß-Nugget schlagen würden, weil Spiel zwischen den Bauteilen vorhanden war.

Nach einer weiteren Ausführungsform ist die erste Aufnahme durch eine kanalförmige Ausnehmung entlang der Längsachse der elektrischen Leitung in der ersten Halterung gebildet. Die kanalförmige Ausnehmung ist komplementär zur Form eines Schweißbereichs des Kontaktelements ausgebildet. Der Schweißbereich des Kontaktelements kann vollständig in der ersten Aufnahme aufgenommen werden. Bei einfachen Kontaktteilen können sehr einfache Geometrien benutzt werden um das Kontaktteil in der korrekten Position zu halten.

Die Drehachse verläuft erfindungsgemäß durch ein erstes Zentrum der ersten Aufnahme. Durch diese Positionierung wird sichergestellt, dass das Zentrum des Schweiß-Nuggets, das Zentrum des Schweißbereichs an dem das Schweiß-Nugget angeschweißt ist, und das Zentrum der ersten Aufnahme zur Drehachse zentriert sind. Dadurch sind reproduzierbare Messungen möglich.

Nach einer weiteren Ausführungsform zeigt das Drehmoment-Beaufschlagungsmittel den Drehwinkel auf einer Anzeige an und/oder gibt es als elektrisches Signal aus. Ein Drehmoment-Beaufschlagungsmittel, das in der Lage ist, zusätzlich zum Drehmoment auch den Drehwinkel zu protokollieren, erlaubt weitere Rückschlüsse auf die Schweißqualität als nur der Drehmomentverlauf allein. Allerdings sind solche Drehmoment-Beaufschlagungsmittel auch kostspieliger.

Bevorzugt ist bei dem Verfahren das gleichmäßige Drehen von einem Startpunkt bis zu einem Endpunkt umfasst, wobei der Endpunkt durch das Abreißen des Schweiß-Nuggets definiert ist. Das gleichmäßige Drehen erlaubt es, reproduktive Kennlinien über den Drehmomentverlauf aufzunehmen. Das ist die Grundvoraussetzung zur Qualitätsbestimmung der Schweißverbindung. Ein Weiter drehen über den Punkt, an dem das Schweiß-Nuggets abreißt, ist nicht notwendig und benötigt zusätzliche Prozesszeit.

Bevorzugt bei dem Verfahren ist das Bereitstellen einer Liste von Referenzdrehmomentwerten für die zu prüfende elektrische Leitungs-Kontaktelement-Kombination umfasst. Die Liste von Referenzdrehmomenten kann sowohl von Herstellern von Kontaktelementen herrühren oder aber bei Experimenten selbst generiert werden. Das Verfahren umfasst auch das Erzeugen einer Liste mit Wertepaaren von Drehmomenten über die Zeit.

Diese Werte können dann zu einem späteren Zeitpunkt als Referenzen benutzt werden. In der Crimp-Technik ist das Verfahren bekannt aus den Referenzwerten und den erlaubten Toleranzen einen sogenannten Toleranzschlauch zu berechnen. Messwerte innerhalb des Toleranzschlauches sind im zulässigen Bereich, Messwerte außerhalb des Toleranzschlauches deuten auf Probleme hin, die zu fehlerhaften Crimp-Verbindungen führen können.

Nach einer weiteren Ausführungsform umfasst das Verfahren den Vergleich der bereitgestellten Wertepaarliste der Referenzdrehmomentwerte mit der erzeugten Liste der Wertepaare. Durch Vergleich der beiden Listen bzw. daraus generierter Kurven kann sehr einfach auf die Qualität der Schweißverbindung geschlossen werden. Nach einer weiteren Ausführungsform umfasst das Verfahren das Bereitstellen von Drehmoment-Toleranzwerten. Durch Vergleichen der gemessenen Drehmomentwerte mit den Referenz Drehmomentwerten werden Toleranzen ermittelt. Durch Vergleich der ermittelten Toleranzwerte mit den vorgegebenen Drehmoment-toleranzwerten kann eine Aussage darüber getroffen werden, wie gut die Qualität der Schweißverbindung ist.

Bevorzugt ist bei dem Verfahren das Bereitstellen einer Liste von Referenzwinkelangaben für die zu prüfende elektrische Leitungs-Kontaktelement-Kombination umfasst und das Bereitstellen eines Drehmoment-Beaufschlagungsmittels, das den Drehwinkel auf einer Anzeige anzeigt und/oder als elektrisches Signal ausgibt. Das Verfahren umfasst des Weiteren das Protokollieren des Drehwinkels und das Treffen einer Aussage darüber, ob die Veränderung des Drehwinkel über die Zeit, gewertet anhand gesammelter Referenzdaten von Gutteilen, eine gute Qualität hat. Die Drehwinkelkurve darf also einen Toleranzschlauch, ermittelt aus Referenzmessungen, nicht durchstoßen.

Nachfolgend wird die Erfindung anhand einer vorteilhaften Ausführungsform rein beispielhaft unter Bezugnahme auf die beigefügten Zeichnungen beschrieben. Es zeigen:
- Fig. la: eine perspektivische Darstellung eines Leitungsendes einer elektrischen Leitung und ein Kontaktelement.
- Fig. 1b: eine perspektivische Darstellung eines Leitungsendes einer elektrischen Leitung mit angeschweißtem Kontaktelement.
- Fig. 2: eine Explosionsdarstellung der Vorrichtung und eines Leitungsendes einer elektrischen Leitung mit angeschweißtem Kontaktelement.
- Fig. 3: eine perspektivische Darstellung eines Leitungsendes einer elektrischen Leitung mit angeschweißtem Kontaktelement positioniert in einer ersten Aufnahme
- Fig. 4: eine perspektivische Darstellung eines Leitungsendes einer elektrischen Leitung mit angeschweißtem Kontaktelement positioniert in einer ersten und einer zweiten Aufnahme.
- Fig. 5: eine Seitenansicht der Vorrichtung mit einem Leitungsende einer elektrischen Leitung mit angeschweißtem Kontaktelement positioniert in einer ersten und einer zweiten Aufnahme.
- Fig. 6: eine perspektivische Darstellung einer Vorrichtung, wobei das Drehmoment-Beaufschlagungsmittel ein Elektromotor ist.
- Fig. 7: ein schematisches Diagramm des Drehmomentverlaufs und des Drehwinkels während einer Messung.

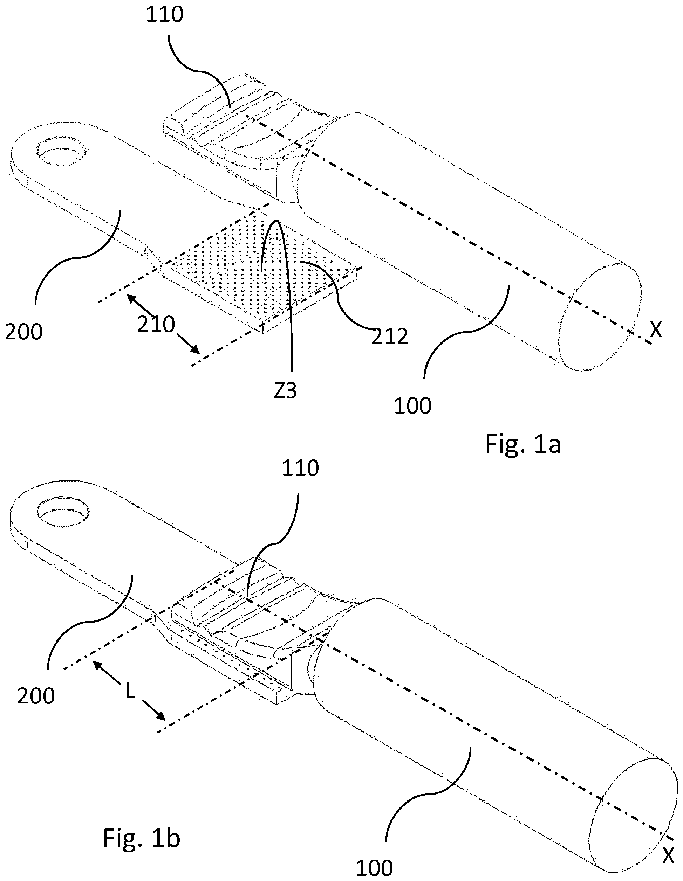

Figur 1a zeigt eine perspektivische Darstellung eines Leitungsendes einer elektrischen Leitung 100 und ein Kontaktelement 200. Die elektrische Leitung 100 weist an ihrem abisolierten Ende ein Schweiß-Nugget 110 auf. Diese Darstellung ist technisch nicht korrekt, wurde aber gewählt um die Anordnung des Schweiß-Nuggets 110 auf einer Schweißfläche 212 des Kontaktelements 200 zu illustrieren. Im Zentrum der Schweißfläche 212 ist das Zentrum Z3 dargestellt. Dieses Zentrum Z3 kann bei einer rechteckigen Schweißfläche 212 geometrisch ermittelt werden. Die Schweißfläche 212 erstreckt sich entlang eines Schweißbereichs 210 entlang einer Längsachse X der elektrischen Leitung 100.

Figur 1b zeigt eine perspektivische Darstellung eines Leitungsendes einer elektrischen Leitung 100 mit angeschweißtem Kontaktelement 200. Das Leitungsende der elektrischen Leitung 100 ist mittels Ultraschallschweißen an das Kontaktelement 200 geschweißt. Dabei hat sich ein Schweiß-Nugget 110 ausgebildet, der die Schweißfläche 212 entlang der Längsachse der elektrischen Leitung 100 entlang einer Länge L bedeckt.

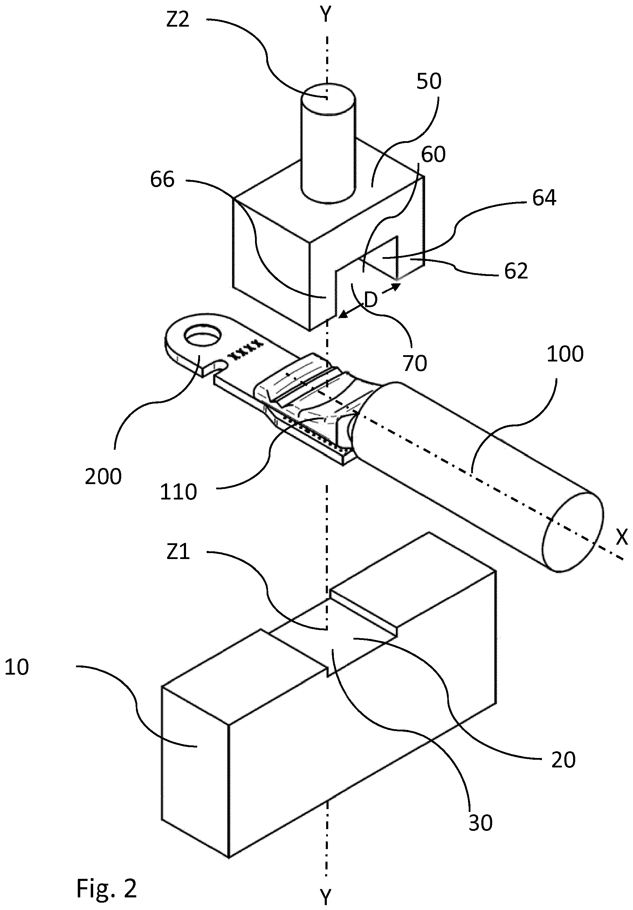

Figur 2 zeigt eine Explosionsdarstellung der Vorrichtung zur Durchführung der Qualitätsbestimmung von Schweißverbindungen und eines Leitungsendes einer elektrischen Leitung 100 mit angeschweißtem Kontaktelement 200. Die Vorrichtung umfasst
eine erste Halterung 10, aufweisend eine erste Aufnahme 20 zum Aufnehmen, zumindest eines Teils, eines Kontaktelements 200, und umfasst
eine zweite Halterung 50, aufweisend eine zweite Aufnahme 60 zur Aufnahme zumindest eines Teils, einer Länge L, eines Schweiß-Nuggets 110, der elektrischen Leitung 100. Die erste Halterung 10 und die zweite Halterung 50 sind um eine gemeinsame Drehachse Y relativ zueinander drehbar. Die erste Aufnahme 20 ist gegenüber der zweiten Aufnahme 60 angeordnet. Die Drehachse Y verläuft durch ein erstes Zentrum Z1 der ersten Aufnahme 20. Die Drehachse Y verläuft durch ein zweites Zentrum Z2 der zweiten Aufnahme 60. Die zweite Aufnahme 60 umfasst einen ersten Vorsprung 62 und einen zweiten Vorsprung 66, der sich jeweils von der zweiten Halterung 50 in Richtung der ersten Halterung 10 erstreckt. Der erste Vorsprung und der zweite Vorsprung sind parallel zueinander und der Drehachse Y angeordnet. Die Drehachse Y ist zwischen dem ersten Vorsprung und dem zweiten Vorsprung angeordnet. Zwischen dem ersten Vorsprung 62, dem zweiten Vorsprung 66 und
einem Teil der zweiten Halterung 50, wird ein Tunnel 70 gebildet, der entlang der Längsachse X der elektrischen Leitung 100 verläuft und der so dimensioniert ist, dass der Tunnel 70 die nicht mit dem Kontaktelement 200 verschweißte Oberfläche des Schweiß-Nuggets 110, zumindest entlang eines Teils der Länge L des Schweiß-Nuggets 110 entlang der Längsachse X umgeben kann. Der erste Vorsprung 62 weist eine erste Innenfläche 64 auf und der zweite Vorsprung 66 weist eine zweite Innenfläche 68 auf. Die erste Innenfläche 64 und die zweite Innenfläche 68 sind einander gegenüber in einem ersten Abstand D angeordnet. Der Abstand D ist so bemessen, dass die, nicht mit dem Kontaktelement 200 verschweißte Oberfläche des Schweiß-Nuggets 110 an die erste Innenfläche 64 und an die zweite Innenfläche 68 angrenzt.

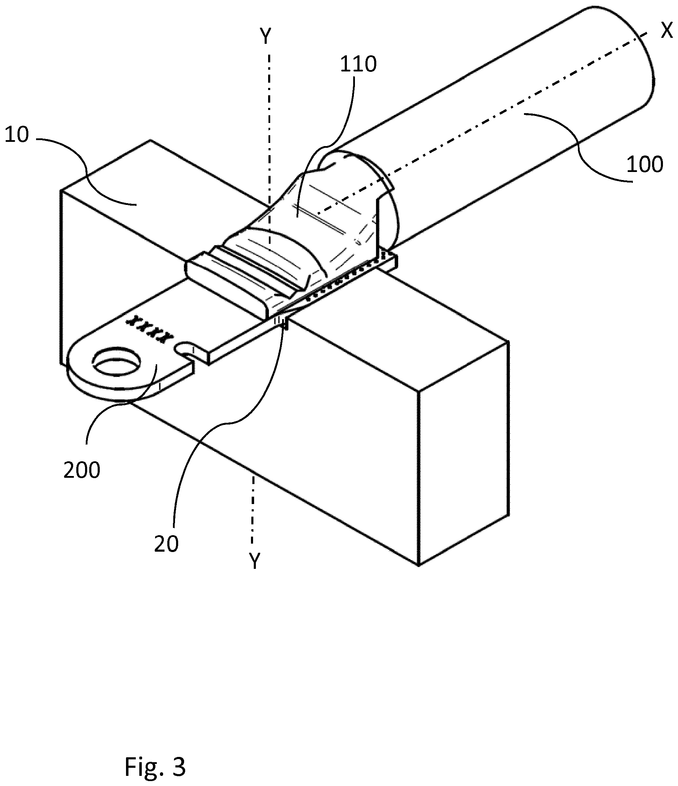

Figur 3 zeigt eine perspektivische Darstellung eines Leitungsendes einer elektrischen Leitung 100 mit angeschweißtem Kontaktelement 200 positioniert in einer ersten Aufnahme 20.Die erste Aufnahme 20 ist durch eine kanalförmige Ausnehmung 30, entlang der Längsachse X der elektrischen Leitung 100, in der ersten Halterung 10 gebildet. Die kanalförmige Ausnehmung 30 ist komplementär zur Form des Schweißbereichs 210 des Kontaktelements 200 ausgebildet. Der Schweißbereich 210 des Kontaktelements 200 kann vollständig in der ersten Aufnahme 20 aufgenommen werden.

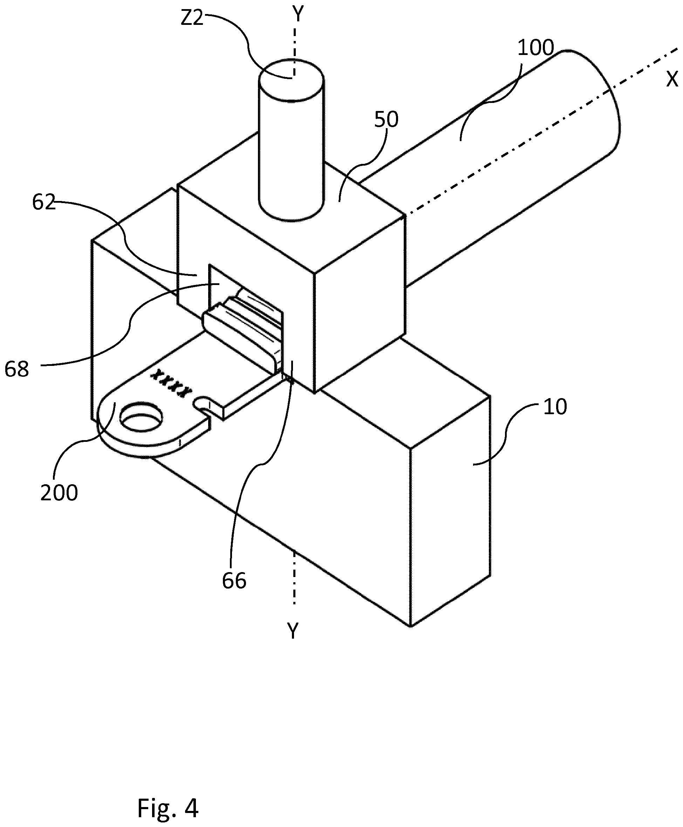

Figur 4 zeigt eine perspektivische Darstellung eines Leitungsendes einer elektrischen Leitung 100 mit angeschweißtem Kontaktelement 200 positioniert in einer ersten und einer zweiten Aufnahme 20, 60. Der erste Vorsprung 62 und zweite Vorsprung 66, sind jeweils seitlich neben dem Schweiß-Nugget 110 angeordnet. Die Vorrichtung ist bereit zur Messung.

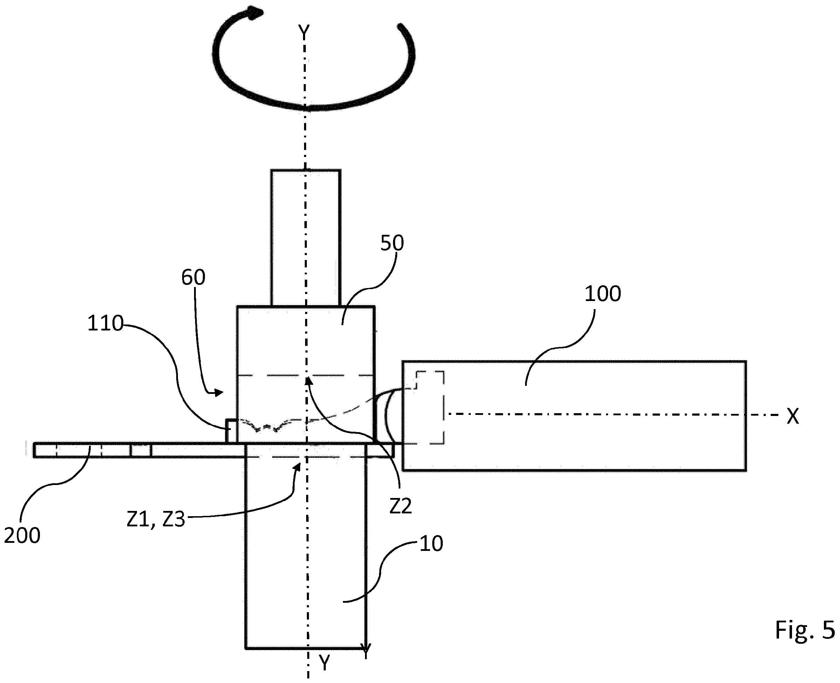

Figur 5 zeigt eine Seitenansicht der Vorrichtung mit einem Leitungsende einer elektrischen Leitung 100 mit angeschweißtem Kontaktelement 200 positioniert in einer ersten und einer zweiten Aufnahme 20,60. Die Darstellung zeigt deutlich, dass das erste Zentrum Z1, das zweite Zentrum Z2 und das dritte Zentrum Z3 entlang der Drehachse Y ausgerichtet sind. Das Kontaktelement 200 ist vollständig in der ersten Aufnahme 20 aufgenommen und gehalten.

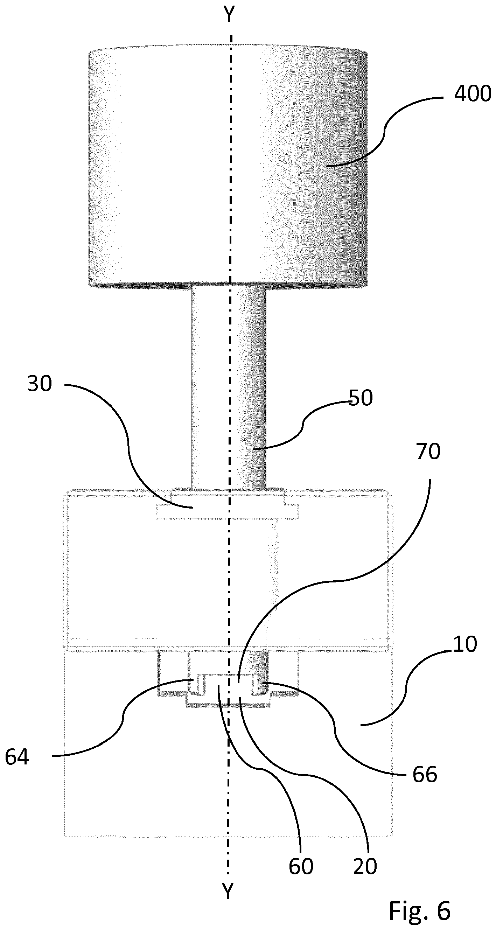

Figur 6 zeigt eine perspektivische Darstellung einer Vorrichtung wobei das Drehmoment-Beaufschlagungsmittel ein Elektromotor 400 ist. Das Drehmoment-Beaufschlagungsmittel ist lösbar mit der zweiten Halterung 50 verbunden und geeignet die zweite Halterung 50 um die Drehachse Y zu drehen. Der elektrischer Antrieb 400 erzeugt das Drehmoment und zeigt auf einer Anzeige das aktuelle Drehmoment an (nicht gezeigt). Das Drehmoment-Beaufschlagungsmittel kann auch den Drehwinkel auf einer Anzeige Anzeigen und/oder als elektrisches Signal ausgeben (hier nicht gezeigt).

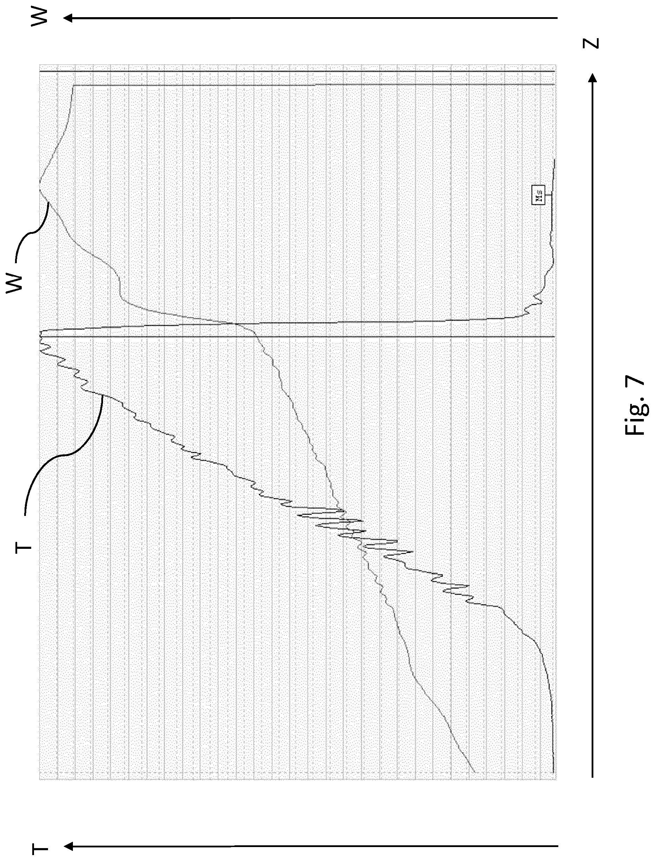

Figur 7 zeigt ein schematisches Diagramm des Drehmomentverlaufs T und des Drehwinkels W während einer Messung. Das Diagramm zeigt den Drehmomentverlauf T und den Verlauf des Drehwinkels W in Abhängigkeit der Zeit Z. Die Kurven wurden bei einer Messung im Labor aufgezeichnet.

## Patentansprüche

1. Verfahren zur Qualitätsbestimmung von Schweißverbindungen zwischen einer elektrischen Leitung (100) und einem Kontaktelement (200), umfassend die Verfahrensschritte:
a) Bereitstellen einer elektrischen Leitung (100) mit einem, an einem Ende (110) der Leitung angeschweißten Kontaktelement (200);
b) Bereitstellen einer Vorrichtung, umfassend:
eine erste Halterung (10) mit einer ersten Aufnahme (20) zum Aufnehmen zumindest eines Teils des Kontaktelements (200), eine zweite Halterung (50) mit einer zweiten Aufnahme (60) zur Aufnahme zumindest eines Teils einer Länge (L) eines Schweiß-Nuggets (110) der elektrischen Leitung (100), wobei:
die erste Halterung (10) und die zweite Halterung (50) um eine gemeinsame Drehachse (Y) relativ zueinander drehbar sind, die erste Aufnahme (20) gegenüber der zweiten Aufnahme (60) angeordnet ist, und die Drehachse (Y) durch ein erstes Zentrum (Z1) der ersten Aufnahme (20) und durch ein zweites Zentrum (Z2) der zweiten Aufnahme (60) verläuft, sowie umfassend: ein Drehmoment-Beaufschlagungsmittel das lösbar mit der zweiten Halterung (50) verbunden und geeignet ist die zweite Halterung (50) um die Drehachse (Y) zu drehen;
c) Drehen der zweiten Halterung (50) mittels des Drehmoment-Beaufschlagungsmittels um die Drehachse (Y) unter gleichzeitigem Protokollieren von Drehmomentwerten (T);
d) Bestimmen der Qualität der Schweißverbindung anhand der ermittelten Drehmomentwerte.

2. Verfahren nach Anspruch 1, wobei das Verfahren im Verfahrensschritt d), das gleichmäßige Drehen von einem Startpunkt bis zu einem Endpunkt umfasst, wobei der Endpunkt durch das Abreißen des Schweiß-Nuggets (110) definiert ist.

3. Verfahren nach einem der Ansprüche 1 oder 2, wobei das Verfahren im Verfahrensschritt a) das Bereitstellen einer Liste von Referenzdrehmomentwerten für die zu prüfende elektrische Leitungs-Kontaktelement-Kombination umfasst, und wobei das Verfahren im Verfahrensschritt d) das Erzeugen einer Liste mit Wertepaaren von Drehmomenten (T) über die Zeit umfasst.

4. Verfahren nach Anspruch 3, wobei das Verfahren zusätzlich den Verfahrensschritt e) den Vergleich der bereitgestellten Referenzdrehmomentwerte mit den erzeugten Wertepaaren umfasst.

5. Verfahren nach Anspruch 4, wobei das Verfahren im Verfahrensschritt a) das Bereitstellen von Drehmomenttoleranzwerten umfasst, und wobei das Verfahren im Verfahrensschritt e) das Treffen einer Aussage darüber umfasst, ob die ermittelten Werte eine Schweißverbindung von guter Qualität entsprechen.

6. Verfahren nach einem der Ansprüche 1-4, wobei das Verfahren im Verfahrensschritt a) das Bereitstellen einer Liste von Referenzwinkelangaben für die zu prüfende elektrische Leitungs-Kontaktelement-Kombination umfasst, und im Verfahrensschritt b) ein Drehmoment-Beaufschlagungsmittel bereitgestellt wird, das den Drehwinkel auf einer Anzeige anzeigt und/oder als elektrisches Signal ausgibt, und wobei das Verfahren im Verfahrensschritt c) das Protokollieren des Drehwinkels (A) umfasst und im Verfahrensschritt d) eine Aussage darüber getroffen wird, ob der protokollierte Drehwinkelverlauf mit den Referenzdrehwinkelangaben korrespondiert.

7. Verfahren nach einem der vorhergehenden Ansprüche, wobei ein Drehmoment-Beaufschlagungsmittel verwendet wird, welches das Drehmoment (T) mittels Handkraft erzeugt.

8. Verfahren nach einem der vorhergehenden Ansprüche 1-5, wobei das Drehmoment-Beaufschlagungsmittel ein elektrischer Antrieb (400) ist, der das Drehmoment erzeugt und auf einer Anzeige anzeigt und/oder als elektrisches Signal ausgibt.

9. Verfahren nach einem der vorhergehenden Ansprüche, wobei die zweite Aufnahme (60) einen ersten Vorsprung (62) und einen zweiten Vorsprung (66) umfasst, der sich jeweils von der zweiten Halterung (50) in Richtung der ersten Halterung (10) erstreckt, wobei der erste Vorsprung und der zweite Vorsprung parallel zueinander und der Drehachse (Y) angeordnet sind, und wobei die Drehachse (Y) zwischen dem ersten Vorsprung und dem zweiten Vorsprung angeordnet ist.

10. Verfahren nach Anspruch 9, wobei zwischen dem ersten Vorsprung (62), dem zweiten Vorsprung (66) und einem Teil der zweiten Halterung (50), ein Tunnel (70) gebildet wird, der entlang einer Längsachse (X) der elektrischen Leitung (100) verläuft und so dimensioniert ist, dass der Tunnel (70) die nicht mit dem Kontaktelement (200) verschweißte Oberfläche des Schweiß-Nuggets (110), zumindest entlang eines Teils der Länge (L) des Nuggets entlang der Längsachse (X) umgibt.

11. Verfahren nach einem der Ansprüche 9-10, wobei der erste Vorsprung (62) eine erste Innenfläche (64) aufweist und der zweite Vorsprung (66) eine zweite Innenfläche (68) aufweist, wobei die erste Innenfläche und die zweite Innenfläche einander gegenüber in einem ersten Abstand (D) angeordnet sind, wobei der Abstand (D) so bemessen ist, dass die nicht mit dem Kontaktelement (200) verschweißte Oberfläche des Schweiß-Nuggets (110) an die erste Innenfläche (64) und an die zweite Innenfläche (68) angrenzt.

12. Verfahren nach einem der vorhergehenden Ansprüche, wobei die erste Aufnahme (20) durch eine kanalförmige Ausnehmung (30) entlang der Längsachse (X) der elektrischen Leitung (100) in der ersten Halterung (10) gebildet ist, wobei die kanalförmige Ausnehmung (30) komplementär zur Form eines Schweißbereichs (210) des Kontaktelements (200) ist, wobei der Schweißbereich (210) des Kontaktelements (200) vollständig in der ersten Aufnahme (20) aufgenommen ist.

13. Verfahren nach einem der vorhergehenden Ansprüche 1-5, wobei das Drehmoment-Beaufschlagungsmittel den Drehwinkel auf einer Anzeige anzeigt und/oder als elektrisches Signal ausgibt.

## Claims

1. A method of determining the quality of weld connections between an electrical line (100) and a contact element (200), comprising the method steps:
a) providing an electrical line (100) having a contact element (200) welded to one end (110) of the line;
b) providing an apparatus comprising:
a first holder (10) having a first receptacle (20) for receiving at least a part of the contact element (200), a second holder (50) having a second receptacle (60) for receiving at least a portion of a length (L) of a weld nugget (110) of the electrical line (100), wherein:
the first holder (10) and the second holder (50) are rotatable relative to one another about a common axis of rotation (Y), the first receptacle (20) is arranged opposite the second receptacle (60), and the axis of rotation (Y) extends through a first center (Z1) of the first receptacle (20) and through a second center (Z2) of the second receptacle (60),
and comprising: a torque application means which is releasably connected to the second holder (50) and which is suitable for rotating the second holder (50) about the axis of rotation (Y);
c) rotating the second holder (50) by means of the torque application means about the axis of rotation (Y) while simultaneously recording torque values (T); and
d) determining the quality of the weld connection on the basis of the determined torque values.

2. A method in accordance with claim 1, wherein the method comprises, in the method step d), uniformly rotating from a starting point up to an end point, wherein the end point is defined by the tearing off of the weld nugget (110).

3. A method in accordance with one of the claims 1 or 2, wherein the method comprises, in the method step a), providing a list of reference torque values for the electrical line-contact element combination to be tested, and wherein the method comprises, in the method step d), generating a list comprising value pairs of torques (T) over time.

4. A method in accordance with claim 3, wherein the method additionally comprises the method step e) of comparing the provided reference torque values with the generated value pairs.

5. A method in accordance with claim 4, wherein the method comprises, in the method step a), providing torque tolerance values, and wherein the method comprises, in the method step e), making a statement on whether the determined values correspond to a weld connection of good quality.

6. A method in accordance with any one of the claims 1 to 4, wherein the method comprises, in the method step a), providing a list of reference angle indications for the electrical line-contact element combination to be tested, and wherein, in the method step b), a torque application means is provided which displays the angle of rotation on a display and/or outputs it as an electrical signal, and wherein the method comprises, in the method step c), recording the angle of rotation (A) and, in the method step d), a statement is made as to whether the recorded angle of rotation curve corresponds to the reference angle of rotation indications.

7. A method in accordance with any one of the preceding claims, wherein a torque application means is used which generates the torque (T) by means of hand force.

8. A method in accordance with any one of the preceding claims 1 to 5, wherein the torque application means is an electric drive (400) which generates the torque and displays it on a display and/or outputs the torque as an electrical signal.

9. A method in accordance with any one of the preceding claims, wherein the second receptacle (60) comprises a first projection (62) and a second projection (66) which in each case extends from the second holder (50) in the direction of the first holder (10), wherein the first projection and the second projection are arranged in parallel with one another and with the axis of rotation (Y), and wherein the axis of rotation (Y) is arranged between the first projection and the second projection.

10. A method in accordance with claim 9, wherein a tunnel (70) is formed between the first projection (62), the second projection (66) and a part of the second holder (50), said tunnel (70) extending along a longitudinal axis (X) of the electrical line (100) and being dimensioned such that the tunnel (70) surrounds the surface of the weld nugget (110) not welded to the contact element (200) at least along a portion of the length (L) of the nugget along the longitudinal axis (X).

11. A method in accordance with one of the claims 9 to 10, wherein the first projection (62) has a first inner surface (64) and the second projection (66) has a second inner surface (68), wherein the first inner surface and the second inner surface are arranged opposite one another at a first spacing (D), wherein the spacing (D) is dimensioned such that the surface of the weld nugget (110) not welded to the contact element (200) adjoins the first inner surface (64) and the second inner surface (68).

12. A method in accordance with any one of the preceding claims, wherein the first receptacle (20) is formed by a channel-shaped recess (30) along the longitudinal axis (X) of the electrical line (100) in the first holder (10), wherein the channel-shaped recess (30) is complementary to the shape of a welding region (210) of the contact element (200), wherein the welding region (210) of the contact element (200) is completely received in the first receptacle (20).

13. A method in accordance with any one of the preceding claims 1 to 5, wherein the torque application means displays the angle of rotation on a display and/or outputs it as an electrical signal.

## Revendications

1. Procédé de détermination de la qualité de liaisons par soudage entre une ligne électrique (100) et un élément de contact (200), comprenant les étapes de procédé consistant à :
a) fournir une ligne électrique (100) avec un élément de contact (200) soudé sur une extrémité (110) de la ligne ;
b) fournir un dispositif, comprenant :
un premier support (10) avec un premier logement (20) destiné à loger au moins une partie de l'élément de contact (200), un second support (50) avec un second logement (60) destiné à loger au moins une partie d'une longueur (L) d'une pépite de soudure (110) de la ligne électrique (100), dans lequel :
le premier support (10) et le second support (50) peuvent être mis en rotation l'un relativement à l'autre autour d'un axe de rotation (Y) commun, le premier logement (20) est agencé en vis-à-vis du second logement (60), et l'axe de rotation (Y) passe par un premier centre (Z1) du premier logement (20) et par un second centre (Z2) du second logement (60),
et comprenant : un moyen d'application de couple qui est raccordé de manière détachable au second support (50) et qui est adapté pour mettre en rotation le second support (50) autour de l'axe de rotation (Y) ;
c) mettre en rotation le second support (50) au moyen du moyen d'application de couple autour de l'axe de rotation (Y) tout en enregistrant des valeurs de couple (T) ;
d) déterminer la qualité de la liaison par soudage à l'aide des valeurs de couple calculées.

2. Procédé selon la revendication 1, dans lequel le procédé, dans l'étape d) du procédé, comprend une mise en rotation homogène depuis un point initial jusqu'à un point final, dans lequel le point final est défini par la rupture de la pépite de soudure (110).

3. Procédé selon l'une quelconque des revendications 1 ou 2, dans lequel le procédé, dans l'étape a) du procédé, comprend de fournir une liste de couples de référence pour la combinaison électrique ligne-élément de contact qu'il s'agit de tester, et dans lequel le procédé, dans l'étape d) du procédé, comprend de générer une liste avec des paires de valeurs de couples (T) au cours du temps.

4. Procédé selon la revendication 3, dans lequel le procédé comprend en outre l'étape e) du procédé consistant à comparer les valeurs de couple de référence fournies aux paires de valeurs générées.

5. Procédé selon la revendication 4, dans lequel le procédé, dans l'étape a) du procédé, comprend de fournir des valeurs de tolérance de couple, et dans lequel le procédé, dans l'étape e) du procédé, comprend d'affirmer si les valeurs calculées correspondent à une liaison par soudage de bonne qualité.

6. Procédé selon l'une quelconque des revendications 1 à 4, dans lequel le procédé, dans l'étape a) du procédé, comprend de fournir une liste d'indications d'angle de référence pour la combinaison électrique ligne-élément contact qu'il s'agit de tester, et, dans l'étape b) du procédé, un moyen d'application de couple est fourni qui affiche l'angle de rotation sur un affichage et/ou l'émet sous forme de signal électrique, et dans lequel le procédé, dans l'étape c) du procédé, comprend d'enregistrer l'angle de couple (A), et dans l'étape d) du procédé, une affirmation est faite quant à savoir si le processus d'angle de rotation enregistré correspond aux indications d'angle de rotation de référence.

7. Procédé selon l'une quelconque des revendications précédentes, dans lequel un moyen d'application de couple est utilisé qui génère le couple (T) par force manuelle.

8. Procédé selon l'une quelconque des revendications précédentes 1 à 5, dans lequel le moyen d'application de couple est un entraînement électrique (400) qui génère le couple et l'affiche sur un affichage et/ou l'émet sous forme de signal électrique.

9. Procédé selon l'une quelconque des revendications précédentes, dans lequel le second logement (60) comprend une première projection (62) et une seconde projection (66) qui, dans chaque cas, s'étend depuis le second support (50) en direction du premier support (10), dans lequel la première projection et la seconde projection sont agencées parallèlement l'une par rapport à l'autre et par rapport à l'axe de rotation (Y), et dans lequel l'axe de rotation (Y) est agencé entre la première projection et la seconde projection.

10. Procédé selon la revendication 9, dans lequel il est formé, entre la première projection (62), la seconde projection (66) et une partie du second support (50), un tunnel (70) qui s'étend le long d'un axe longitudinal (X) de la ligne électrique (100) et qui est dimensionné de telle sorte que le tunnel (70) entoure la surface de la pépite de soudure (110) qui n'est pas soudée à l'élément de contact, au moins le long d'une partie de la longueur (L) de la pépite, le long de l'axe longitudinal (X).

11. Procédé selon l'une quelconque des revendications 9 à 10, dans lequel la première projection (62) présente une première surface intérieure (64) et la seconde projection (66) présente une seconde surface intérieure (68), dans lequel la première surface intérieure et la seconde surface intérieure sont agencées en vis-à-vis l'une de l'autre à une première distance (D), la distance (D) étant mesurée de telle sorte que la surface de la pépite de soudure (110) qui n'est pas soudée à l'élément de contact (200) vient en butée contre la première surface intérieure (64) et la seconde surface intérieure (68).

12. Procédé selon l'une quelconque des revendications précédentes, dans lequel le premier logement (20) est formé par un évidement en forme de canal (30) le long de l'axe longitudinal (X) de la ligne électrique (100) dans le premier support (10), dans lequel l'évidement en forme de canal (30) est complémentaire à la forme d'une zone de soudure (210) de l'élément de contact (200), la zone de soudure (210) de l'élément de contact (200) étant entièrement logée dans le premier logement (20).

13. Procédé selon l'une quelconque des revendications précédentes 1 à 5, dans lequel le moyen d'application de couple affiche l'angle de rotation sur un affichage et/ou l'émet sous forme de signal électrique.
